# EUROPEAN PATENT APPLICATION

(11) **EP 4 456 261 A1**
(43) Date of publication of application: **30.10.2024**
(21) Application number: 22911911.0
(22) Date of filing: 21.12.2022
(51) Int. Cl.: H01M 10/6556, H01M 10/6557, H01M 10/613, H01M 50/242

(54) **HEAT-CONTROLLABLE BATTERY PACK**

(30) Priority: 22.12.2021 KR 20210184721
(71) Applicant: POSCO Co., Ltd, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: HA, Won, Pohang-si, Gyeongsangbuk-do 37669 (KR)
(74) Representative: Nederlandsch Octrooibureau
(86) International application number: PCT/KR2022/020926
(87) International publication number: WO 2023/121278

(57) **Abstract**

A heat controllable battery pack is provided. The battery pack includes a lower cover including a first cooling line, through which a refrigerant moves, installed therein and supporting a lower portion of a plurality of cell modules, a plurality of crash structures installed in positions between the plurality of cell modules on an upper portion of the lower cover and including a second cooling line, through which the refrigerant cooling the cell modules moves, installed therein, a side frame protecting side surfaces of the plurality of cell modules, and an upper cover covering an upper portion of the plurality of cell modules.

## Description

### [Technical Field]

The present invention relates to a heat controllable battery pack capable of cooling the temperature of a cell module to an appropriate temperature.

### [Background Art]

Generally, in devices that use secondary batteries, such as electric vehicles, electric aircraft, and industrial electric equipment, batteries should maintain a constant temperature in order to maximize battery efficiency and prevent thermal runaway.

Lithium-based secondary batteries, which are currently the mainstream, have a narrow range of appropriate holding temperatures of about 15 to 45°C, and there is a risk of thermal runaway if the batteries are maintained at temperatures thereabove for a long period of time. Accordingly, devices that use secondary batteries, such as electric vehicles, maintain the temperature using a battery thermal management system so that batteries may operate in a constant temperature range.

Battery packs used in electric vehicles generally include structural parts, such as an upper cover, a side frame, an inner crash structure, and a lower cover, and a battery cell module, a battery management system (BMS), and a thermal management system (TMS) installed therein.

Among the battery pack components, the thermal management system plays a role of maintaining the temperature of the battery constant.

The thermal management system includes a component that supplies heat to the battery when the temperature of the battery is below an appropriate level or absorb heat from the battery when the temperature of the battery is above the appropriate level.

The thermal management system is a component usually manufactured using aluminum plates or extruded materials having high thermal conductivity in a hollow shape through which a refrigerant may flow, maintaining a constant temperature through a heat exchanger after the refrigerant flowing therein circulates, and repeating circulation and stagnation depending on the temperature of the refrigerant, thereby or the like after the refrigerant flowing therein is circulated, thereby constantly maintaining a temperature of the battery.

In the thermal management system, such a component is called a cooling panel, a cooling system, etc. (which also plays a role of heating, but since its role is mainly cooling, it is also commonly referred to as a cooling system), and in the case of using a prismatic cell or pouch cell, the cell module has a hexahedral shape, and thus, the cooling system is mounted to contact one surface of the hexahedron, and in most cases, it is mounted to contact a lower surface of the cell.

Among the battery pack components, a component located inside the pack to serve to disperse and absorb shock from the outside is called an inner crash structure.

The inner crash structure is usually located between cell modules and is connected to the front/rear/side frames.

As vehicles are driven with the risk of various collisions, rear-end collisions, and rollover accidents, external shocks may be applied to battery packs, leading to damage to batteries. In the case of lithium-ion secondary batteries, if internal electrolyte and electrodes are exposed to the atmosphere, a fire may occur, threatening the safety of the occupants, so the role of a crash structure that may protect the cells inside battery packs from external impacts is very important.

The reason why the cooling panel is mounted on the lower surface of the cell module in most current battery packs is because electrodes are located on the upper surface of the cell and inner crash structures are located on the side surface of the cell. As the battery is charged and discharged, heat is generated inside the cell module in all directions: front/back/left/right/top/bottom of the cell. The cooling panel is located only at the bottom of the cell module, which is not efficient in terms of involvement in thermal management only in one of the six surfaces.

In addition, although the role of the crash structure to protect the battery in the event of a vehicle collision is important, there is a problem in that it is not efficient that the crash structure, which occupies a significant portion of the limited internal space of the battery pack, plays only one role of protecting the cell module.

### [Disclosure]

### [Technical Problem]

The present invention attempts to provide a heat controllable battery pack capable of cooling a cell module using a crash structure by forming a cooling line inside the crash structure.

### [Technical Solution]

In an exemplary embodiment of the present invention, a battery pack includes: a lower cover including a first cooling line, through which a refrigerant moves, installed therein and supporting a lower portion of a plurality of cell modules; a plurality of crash structures installed in positions between the plurality of cell modules on an upper portion of the lower cover and including a second cooling line, through which the refrigerant cooling the cell modules moves, installed therein; a side frame protecting side surfaces of the plurality of cell modules; and an upper cover covering an upper portion of the plurality of cell modules.

The first cooling line and the second cooling line may be connected to each other.

The battery pack may further include a first tube connected to the first cooling line; and a second tube connected to the second cooling line and coupled to the first tube.

The first tube and the second tube may be connected to each other by a connector.

The refrigerant may be independently supplied to each of the first cooling line and the second cooling line.

The refrigerant may be supplied to circulate through the first cooling line and the second cooling line.

A buffer member may be attached to the side surface of the crash structure.

The battery pack may further include a partition member in contact with the side surfaces of the plurality of cell modules in a position between the plurality of crash structures and including a third cooling line installed therein.

Electrodes of the plurality of cell modules may be installed in a direction of the side frame, and a fourth cooling line is installed in the upper cover to cool the side surfaces of the plurality of cell modules.

### [Advantageous Effects]

According to an embodiment of the present invention, with a plurality of cell modules located on the upper side of the lower cover, the crash structure is installed between the plurality of cell modules, and thus, it is possible to cool the cell modules to an appropriate temperature by the first cooling line formed in the lower cover and the second cooling line formed at the crash structure, thereby improving stability and durability.

### [Description of the Drawings]

FIG. 1 is an exploded perspective view schematically illustrating a heat controllable battery pack according to a first embodiment of the present invention.
FIG. 2 is a perspective view schematically illustrating a state in which a crash structure is installed on an upper side of a lower cover of a heat controllable battery pack of FIG. 1.
FIG. 3 is a perspective view schematically illustrating a crash structure according to the first embodiment of the present invention.
FIG. 4 is a side view schematically illustrating a crash structure according to a second embodiment of the present invention.
FIG. 5 is a perspective view schematically illustrating a crash structure according to a third embodiment of the present invention.
FIG. 6 is a perspective view schematically illustrating a crash structure according to a fourth embodiment of the present invention.
FIG. 7 is an exploded perspective view schematically illustrating a heat controllable battery pack according to a fifth embodiment of the present invention.

### [Mode for Invention]

Hereinafter, the present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

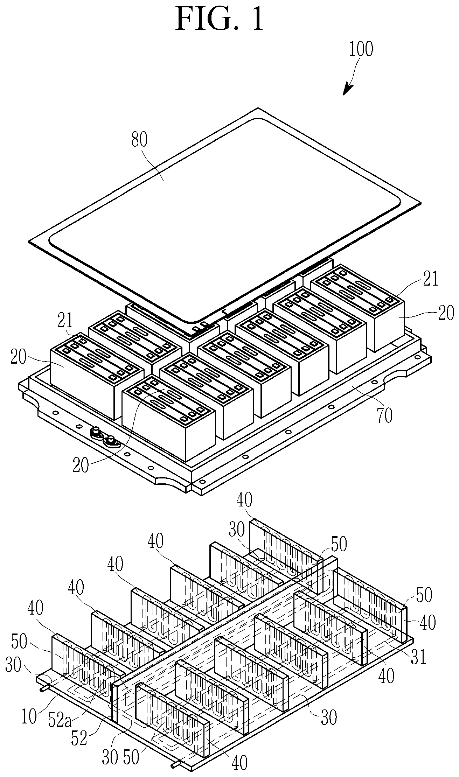

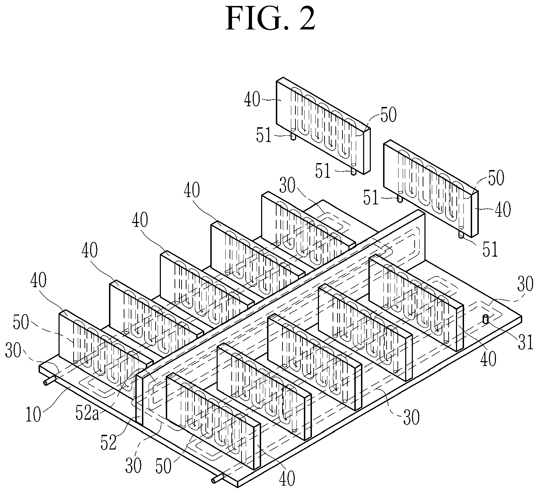

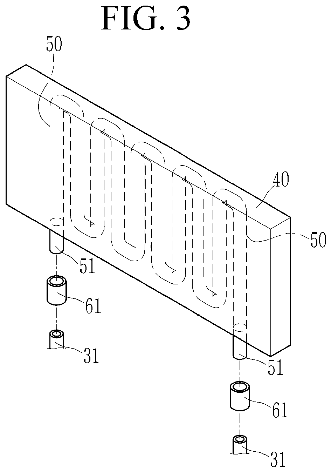

FIG. 1 is an exploded perspective view schematically illustrating a heat controllable battery pack according to a first embodiment of the present invention, FIG. 2 is a perspective view schematically illustrating a state in which a crash structure is installed on an upper side of a lower cover of a heat controllable battery pack of FIG. 1, and FIG. 3 is a perspective view schematically illustrating a crash structure according to the first embodiment of the present invention.

As shown in FIGS. 1 to 3, a heat controllable battery pack 100 according to the first embodiment of the present invention includes a lower cover 10 including a first cooling line 30, through which a refrigerant moves, installed therein and supporting a lower portion of a plurality of cell modules 20, a crash structure 40 installed in positions between the plurality of cell modules 20 on an upper portion of the lower cover 10 and including a second cooling line 50, through which the refrigerant cooling the cell modules 20 moves, installed therein, a side frame 70 protecting the side of the plurality of cell modules 20, and an upper cover 80 covering an upper portion of the plurality of cell modules 20. Here, the cell module 20 is described as an example in which electrodes are located in an upper portion thereof

Accordingly, the remaining surface of the cell module 20 is cooled except for the upper portion in which the electrodes are located, and this will be described in detail below.

The lower cover 10 is installed with the plurality of cell modules 20 seated thereon, and may be installed in a plate shape to stably support each of the plurality of cell modules 20.

The first cooling line 30 may be installed in the lower cover 10 to cool the plurality of cell modules 20 to an appropriate temperature while supporting them.

The first cooling line 30 is installed inside the lower cover 10, corresponding to the entire area of the lower cover 10, and may be installed so that a refrigerant flows to cool each of the plurality of cell modules 20 to an appropriate temperature.

The first cooling line 30 is formed as a single line inside the lower cover 10 and is installed so that the refrigerant flows along the inside.

However, the first cooling line 30 is not necessarily limited to being installed as a single line, and may also be changed to be installed as a plurality of lines. That is, the first cooling line 30 may be modified and installed to cool the plurality of cell modules 20 by specifying sections of the plurality of cell modules 20.

The lower cover 10 is manufactured to be thick to protect a lower portion of a battery pack from foreign substances, such as stones, debris, and falling objects, on the road while the vehicle is running, and the lower cover 10 may also serve to disperse and absorb collision energy together.

On the upper side of the lower cover 10, the plurality of cell modules 20 are arranged in a plurality of rows and columns, and the crash structure 40 may be installed between the cell modules 20.

The crash structure 40 is installed in a position between the plurality of cell modules 20 to cushion a shock transmitted to the cell modules 20 and to cool each cell module 20 to an appropriate temperature.

To this end, the second cooling line 50, through which refrigerant for cooling flows, may be installed inside the crash structure 40.

The second cooling line 50 is installed inside the crash structure 40, and may be bent several times in one direction or the reverse direction to correspond to the size of the crash structure 40 and installed to correspond to the entire area of the crash structure 40.

In the present embodiment, the second cooling line 50 is installed as a single unit inside the crash structure 40. However, the second cooling line 50 is not necessarily limited to being formed as a single line and may be installed as a plurality of lines to supply a separate refrigerant to each cooling line.

In this manner, the plurality of cell modules 20 are arranged in a plurality of rows and columns in the lower cover 10 and the crash structures 40 are installed in positions therebetween, so impact damage may not occur even by an action of external force.

In addition, the plurality of cell modules 20 are installed with both sides in contact with the crash structure 40 and heat-exchanged with the refrigerant flowing along the second cooling line 50 installed inside the crash structure 40, to be cooled to an appropriate temperature.

A thickness and manufacturing method of the crash structure 40 may vary depending on the weight of the cell module to be mounted thereon, the shock absorption capacity of the vehicle body, etc.

For example, if a large amount of high-strength steel is used in the vehicle body and the shock absorption design is sufficient, the vehicle body may absorb a significant portion of energy generated during a vehicle collision, and thus, the crash structure 40 may be formed of a relatively thin or weak material.

On the other hand, if the vehicle body is designed to be weak, the crash structure should absorb a significant portion of energy generated during a collision, so the crash structure 40 may be formed of a relatively thick or strong material.

Meanwhile, a partition member 52 contacting the side surfaces of the plurality of cell modules 20 may be installed in a position between the plurality of crash structures 40.

The partition member 52 is installed with a long length between the plurality of crash structures 40 arranged in a plurality of columns and rows, and may be installed in contact with the side of the cell module 20.

Since a third cooling line 52a is installed inside the partition member 52, the side portions of the plurality of cell modules 20 may be appropriately cooled.

That is, the cell module 20 may be more effectively cooled by the third cooling line 52a formed inside the partition member 52, in addition to the first cooling line 30 formed in the lower cover 10 and the second cooling line 50 formed inside the crash structure 40.

In order to connect the first cooling line 30 and second cooling line 50 described above to each other, a first tube 31 and a second tube 51 may be installed.

One side of the first tube 31 maybe connected to the first cooling line 30 formed in the lower cover 10, and the other side thereof may be connected to the second tube 51 connected to the second cooling line 50 formed in the plurality of crash structures 40.

The first tube 31 and the second tube 51 may be connected by a connector 61.

The connector 61 may be formed of a material including rubber, silicone, polymer material, or metal material to enable connection of the first tube 31 and the second tube 51 in a sealed state.

The connector 61 connects the first tube 31 and the second tube 51 in a sealed state, enabling stable supply of a refrigerant. The first tube 31 and the second tube 51 are described as being connected by the connector 61 in the present embodiment, but are not necessarily limited thereto, and the first tube 31 and the second tube 51 may also be integrally directly connected to each other.

In the present embodiment, the second cooling line 50 may be installed so that the connector 61 is installed in the direction of the lower cover 10 and may be formed to have a long length in a horizontal direction, and a bent portion is formed at a predetermined position in a longitudinal direction. Of course, the second cooling line 50 is not necessarily limited thereto, and the position of the connector 61 may be changed to the side surface of the crash structure 40, etc.

Meanwhile, positions of an inlet and outlet where the refrigerant flows into the first cooling line 20 and the second cooling line 50, a thickness of a flow path, and a direction in which the refrigerant flows may be determined according to a change in the configuration of the overall system including heat capacity and volume of the refrigerant.

As described above, the refrigerant is supplied independently to each of the first cooling line 30 and the second cooling line 50 to cool each of the plurality of cell modules 20. However, the present invention is not necessarily limited thereto, and it is also possible for the refrigerant to be circulated and supplied in a state in which the first cooling line 30 and the second cooling line 50 are connected to each other.

Meanwhile, the plurality of cell modules 20 may be protected by the side frame 70, while being seated on the lower cover 10.

The side frame 70 protects the plurality of cell modules 20 located inside and is installed to stably protect the plurality of cell modules 20 between the lower cover 10 and the upper cover 80.

As described above, in the heat controllable battery pack 100 of the present embodiment, in a state in which the plurality of cell modules are located on an upper side of the lower cover 10, the crash structure 40 is installed between the plurality of cell modules 20, and thus, the cell modules 10 may be cooled to an appropriate temperature by the first cooling line 30 formed in the lower cover 10 and the second cooling line 50 formed in the crash structure 40, thereby improving stability and durability.

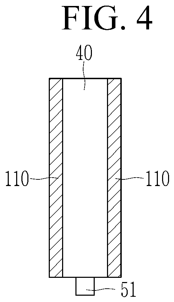

FIG. 4 is a side view schematically illustrating a crash structure according to a second embodiment of the present invention. The same reference numbers as in FIGS. 1 to 3 refer to identical or similar members with the same or similar functions. Hereinafter, detailed descriptions of the same reference numbers will be omitted.

As shown in FIG. 4, a buffer member 110 may be attached to the side surface of the crash structure 40 of the heat controllable battery pack according to the second embodiment of the present invention.

The buffer member 110 is attached to the side surface of the crash structure 40 that contacts the cell module 20, and may stably protect the cell modules 20 when an external shock is transmitted.

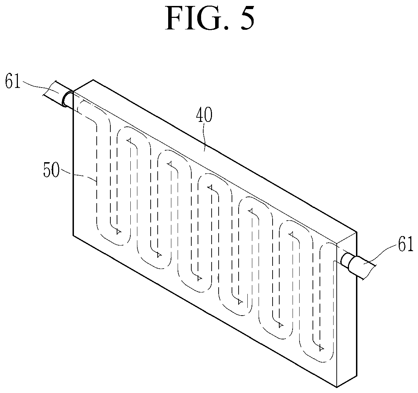

FIG. 5 is a perspective view schematically illustrating a crash structure according to a third embodiment of the present invention. The same reference numbers as in FIGS. 1 to 4 refer to identical or similar members with the same or similar functions. Hereinafter, detailed descriptions of the same reference numbers will be omitted.

As shown in FIG. 5, the connectors 61 of the crash structure 40 of the heat controllable battery pack according to the third embodiment of the present invention may be installed on both opposing sides of the crash structure 40, respectively. In this manner, the connectors 61 may be formed on both opposing sides of the crash structure 40 and connected to the third cooling line 52a of the partition member 52.

Accordingly, the second cooling line 50 may be installed inside the crash structure 40, while connecting the two opposing sides of the crash structure 40, and may be bent at a predetermined position in the longitudinal direction.

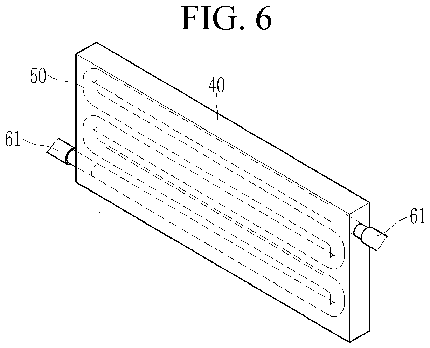

FIG. 6 is a perspective view schematically illustrating a crash structure according to a fourth embodiment of the present invention. The same reference numbers as in FIGS. 1 to 5 refer to identical or similar members with the same or similar functions. Hereinafter, detailed descriptions of the same reference numbers will be omitted.

As shown in FIG. 6, the connector 61 of the crash structure 40 of the heat controllable battery pack according to the fourth embodiment of the present invention may be installed at different upper and lower positions on both sides.

Therefore, the second cooling line 50 may be installed inside the crash structure 40 to connect the connectors 61 installed at different positions on both sides of the crash structure 40 and may be bent at a predetermined position in the longitudinal direction. In this manner, the connectors 61 may be formed on both opposing sides of the crash structure 40 and connected to the third cooling line 52a of the partition member 52.

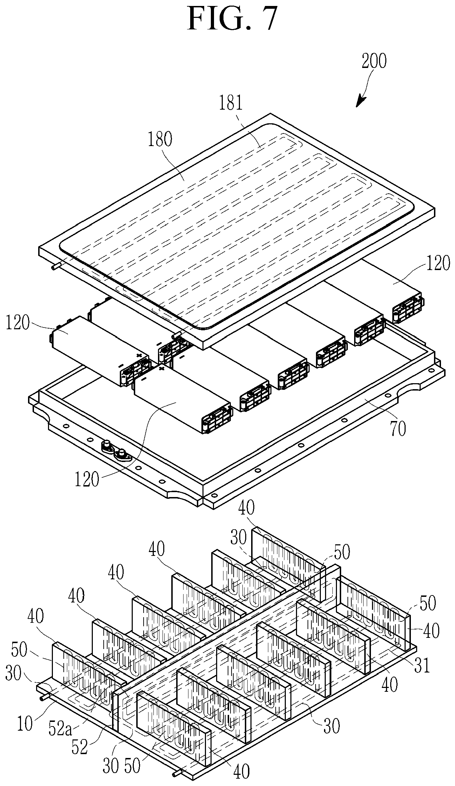

FIG. 7 is an exploded perspective view schematically illustrating a heat controllable battery pack according to a fifth embodiment of the present invention. The same reference numbers as in FIGS. 1 to 6 refer to identical or similar members with the same or similar functions. Hereinafter, detailed descriptions of the same reference numbers will be omitted.

As shown in FIG. 7, a plurality of cell modules 120 of a heat controllable battery pack 200 according to the fifth embodiment of the present invention may be arranged with electrodes installed in a lateral direction.

An upper portion of the plurality of cell modules 120 may be covered with an upper cover 180 with a fourth cooling line 181 installed therein.

Accordingly, the plurality of cell modules 20 may be effectively cooled by the first cooling line 30 formed in the lower cover 10, the second cooling line 50 formed in the crash structure 40, the third cooling line formed in the partition member 52, and the fourth cooling line 181 formed in the upper cover 180.

Although the exemplary embodiment of the present invention has been described above, the present invention is not limited thereto, and it is possible to vehiclery out various modifications within the claim coverage, the description of the invention, and the accompanying drawings, and such modifications also fall within the scope of the present invention.

## Claims

1. A battery pack comprising:
a lower cover including a first cooling line, through which a refrigerant moves, installed therein and supporting a lower portion of a plurality of cell modules;
a plurality of crash structures installed in positions between the plurality of cell modules on an upper portion of the lower cover and including a second cooling line, through which the refrigerant cooling the cell modules moves, installed therein;
a side frame protecting side surfaces of the plurality of cell modules; and
an upper cover covering an upper portion of the plurality of cell modules.

2. The battery pack of claim 1, wherein:
the first cooling line and the second cooling line are connected to each other.

3. The battery pack of claim 2, further comprising:
a first tube connected to the first cooling line; and
a second tube connected to the second cooling line and coupled to the first tube

4. The battery pack of claim 3, wherein:
the first tube and the second tube are connected to each other by a connector.

5. The battery pack of claim 1, wherein:
the refrigerant is independently supplied to each of the first cooling line and the second cooling line.

6. The battery pack of claim 1, wherein:
the refrigerant is supplied to circulate through the first cooling line and the second cooling line.

7. The battery pack of claim 1, wherein:
a buffer member is attached to the side surface of the crash structure.

8. The battery pack of claim 1, further comprising:
a partition member in contact with the side surfaces of the plurality of cell modules in a position between the plurality of crash structures and including a third cooling line installed therein.

9. The battery pack of claim 1, wherein:
electrodes of the plurality of cell modules are installed in a direction of the side frame, and
a fourth cooling line is installed in the upper cover to cool the side surfaces of the plurality of cell modules.
